(19) Europäisches Patentamt
European Patent Office
Office européen des brevets

(11) Publication number: 0 129 889 A2

(12) **EUROPEAN PATENT APPLICATION**

(21) Application number: 84107219.2

(22) Date of filing: 23.06.84

(51) Int. Cl.[4]: C 07 C 131/00
C 07 C 125/063, C 07 C 153/00
C 07 F 9/09, C 07 F 9/40
C 07 F 9/165, A 01 N 47/24
A 01 N 57/12, A 01 N 57/20

(30) Priority: 27.06.83 JP 114378/83
30.06.83 JP 117152/83

(43) Date of publication of application:
02.01.85 Bulletin 85/1

(84) Designated Contracting States:
CH DE FR GB LI NL

(71) Applicant: NIPPON KAYAKU KABUSHIKI KAISHA
Tokyo Fujimi Bldg. 11-2 Fujimi 1-chome Chiyoda-ku
Tokyo 102(JP)

(72) Inventor: Sato, Hitoshi
2-38-201, Nishiageo-dainidanchi 77-1, Koshikiya
Ageo-shi Saitama-ken(JP)

(72) Inventor: Kato, Shoichi
309-2, Hirakataryo-ryoke
Ageo-shi Saitama-ken(JP)

(72) Inventor: Masui, Akio
1-14, Minami-nakano
Ohmiya-shi Saitama-ken(JP)

(72) Inventor: Watanabe, Tetuo
2-15-1-305, Fujimi
Ageo-shi Saitama-ken(JP)

(74) Representative: Türk, Dietmar, Dr. rer. nat. et al,
Redies, Redies, Türk & Gille Patentanwälte
Brucknerstrasse 20
D-4000 Düsseldorf 13(DE)

# (54) An oxime derivative and its use as an insecticide or acaricide.

(57) Described are an oxime derivative of the formula:

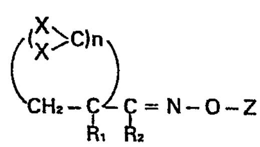

(1)

wherein $R_1$ is hydrogen or methyl, $R_2$ is hydrogen, $C_1$~$C_4$- alkylthio, $C_1$~$C_2$- monoalkylamino, $C_1$~$C_2$- dialkylamino or cyano Z is

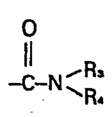

or

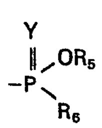

$R_3$ is methyl, ethyl, propyl or phenyl, $R_4$ is hydrogen or methyl, $R_5$ is $C_1$~$C_4$- alkyl, $R_6$ is $C_1$~$C_4$- alkylthio or $C_1$~$C_3$- alkoxy, X is hydrogen, bromo, chloro or fluoro, Y is oxygen or sulfur; provided that X is bromo, chloro or fluoro when Z is

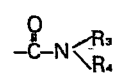

,

n is 1 when X is bromo or chloro, n is 2 when X is fluoro and n is 1 or 2 when X is hydrogen processes for producing said compound, an insecticidal or acaricidal composition containing said compound as an effective component and a method for killing insect pests or acarids using an effective amount of said compound.



Croydon Printing Company Ltd.

Specification

## Detailed description of the invention

The present invention relates to a new oxime derivative of the formula:

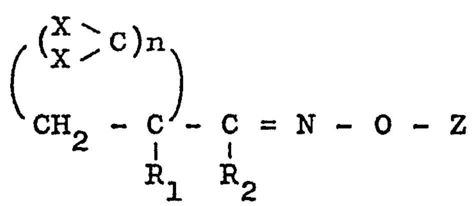

(1)

wherein $R_1$ is hydrogen or methyl, $R_2$ is hydrogen, $C_1 \sim C_4$-alkylthio, $C_1 \sim C_2$-monoalkylamino, $C_1 \sim C_2$-dialkylamino or cyano, Z is $-\overset{O}{\overset{\|}{C}}-N{<}\begin{smallmatrix}R_3\\R_4\end{smallmatrix}$ or $-\overset{Y}{\overset{\|}{P}}{<}\begin{smallmatrix}OR_5\\R_6\end{smallmatrix}$ , $R_3$ is methyl, ethyl, propyl or phenyl, $R_4$ is hydrogen or methyl, $R_5$ is $C_1 \sim C_4$-alkyl, $R_6$ is $C_1 \sim C_4$-alkylthio or $C_1 \sim C_3$-alkoxy, X is hydrogen, bromo, chloro or fluoro, Y is oxygen or sulfur; provided that X is bromo, chloro or fluoro when Z is $-\overset{O}{\overset{\|}{C}}-N{<}\begin{smallmatrix}R_3\\R_4\end{smallmatrix}$ , n is 1 when X is bromo or chloro, n is 2 when X is fluoro and n is 1 or 2 when X is hydrogen, processes for producing said compound, an insecticidal or acaricidal composition containing said compound as an effective component and a method for killing insect pests or acarids using an effective amount of said compound.

The compounds of the present invention are novel ones which

have never been disclosed in literature, and proved to have a wide insecticidal effect on those insect pests which damage crops, such as LEPIDOPTERA (e.g. leaf folder, common cabbageworm, cutworm, diamond back moth, or stem borers), THRIPIDAE (e.g. thrips), HEMIPTERA (e.g. stink bugs, lace bugs, leafhoppers, planthoppers, or aphids; COLEOPTERA (e.g. long horned beetles, ladybirds, weevils or grubs) as well as on hygienic insect pests such as mosquitos, flies, or cockroaches. In addition, it has also been found out that said compounds exert an insecticidal effect on such insect pests that have acquired a resistance to organophosphorus or carbamate pesticides. Further, said compounds have found out to be useful as an acaricide because of their exterminative effect on acarids. These compounds do not damage plants at all and can be used in the form of a mixture with other chemicals, thereby exhibiting a remarkably high usefulness. Furthermore, the compounds of the present invention can not only kill insect pests through contact toxisity by foliar spray but also kill insect pests on leaves of plants by root zone treatment. Namely, the compounds of the present invention were found to be effective systemic insecticides.

The compounds of the present invention of Formula (1) can be manufactured by reacting a compound of the formula:

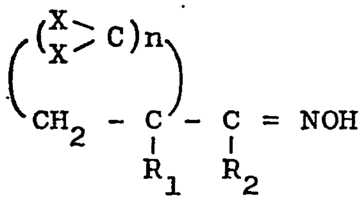 (2)

wherein $R_1$, $R_2$, X and n are as defined above with a compound of the formula:

$R_3 - NCO$ (3)

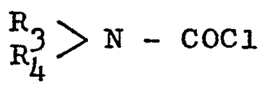 (4)

or

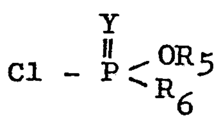 (5)

wherein $R_3$ to $R_6$ and Y are as defined above, according to methods (I), (II) and (III):

Method (I): The compounds of Formula (1) wherein $R_1$, $R_2$, X, and n are as defined above and Z is $-\overset{O}{\overset{\|}{C}}-NHR_3$ ($R_3$ is as defined above) can be manufactured by reacting a compound of Formula (2) with a compound of Formula (3) in the presence of a catalyst in a proper solvent at -20°C to 150°C, preferably at 20°C to 100°C for 0.5 to 10 hours.

As examples of the catalysts there may be mentioned tertiary

amines (triethylamine, pyridine, 1,4-diazabicyclo-(2,2,2) octane) or organic tin compounds (tri-n-butyltin acetate, dimethyltin dichloride or di-n-butyltin sulfide).

As examples of the solvents there may be mentioned aromatic hydrocarbons (benzene, toluene, xylene), aliphatic hydrocarbons (hexane, heptane, petroleum benzine), halogenated hydrocarbons (chloroform, dichloromethane), aprotic dipolar solvents (N,N-dimethylformamide, dimethyl sulfoxide), ethers (diisopropyl ether, diethyl ether, 1,2-dimethoxyethane tetrahydrofuran), nitriles (acetonitrile propionitrile), ketones (acetone, diisopropyl ketone) and esters such as ethyl acetate.

Method (II): The compounds of Formula (1) wherein $R_1$, $R_2$, X, and n are as defined above Z is $-\overset{O}{\overset{\|}{C}}-N{<}\begin{smallmatrix}R_3\\R_4\end{smallmatrix}$ ($R_3$ and $R_4$ are as defined above) are manufactured by reacting a compound of Formula (2) with a compound of Formula (4) in the presence of a base in the above solvent at -20°C to 150°C, preferably at 0°C to 80°C for 0.5 to 5 hours.

As examples of the bases there may be mentioned hydroxy compounds of alkaline metals (NaOH, KOH), hydroxy compounds of alkaline earth metals ($Ca(OH)_2$, $Mg(OH)_2$), alcholate of alkali metals such as sodium alcholate, oxides of alkali metals ($Na_2O$, $K_2O$), carbonates of alkali metals ($Na_2CO_3$,

$K_2CO_3$), $NaNH_2$, aliphatic or aromatic tertiary amines such as trialkylamines (triethylamine, trimethylamine), dialkyl anilines (N,N-dimethylaniline, N,N-diethylaniline) and pyridine, or silver oxide.

Method (III): The compounds of Formula (1) wherein $R_1$, $R_2$, X and n are as defined above, Z is $-\overset{Y}{\overset{\|}{P}}\begin{smallmatrix}<OR_5\\ <R_6\end{smallmatrix}$ ($R_5$, $R_6$ and Y are as defined above) can be manufactured by reacting a compound of Formula (2) with a compound of Formula (5) in the presence of the base used in Method (II) in a proper solvent at room temperature to 100°C, preferably at 30～70°C for 0.5 to 5 hours.

As examples of the solvents there may be mentioned those used in Method (II) and two-phase solvents such as toluene/water or dichloromethane/water.

When the reaction is conducted in two-phase solvents, it may be preferable to add into the reaction system a phase transfer catalyst such as tetrabutylammoniumbromide or triethylbenzylammoniumchloride.

As examples of $C_1$-$C_4$-alkylthios in Formula (1) there may be mentioned methylthio, ethylthio, n-propylthio, iso-propylthio, n-butylthio, iso-butylthio, sec-butylthio or tert-buthylthio.

As examples of $C_1$-$C_2$-monoalkylaminos in Formula (1) there may be mentioned methylamino or ethylamino.

As examples of $C_1$-$C_2$-dialkylaminos there may be mentioned N,N-dimethylamino, N,N-diethylamino or N-methyl-N-ethylamino.

As examples of $C_1$-$C_4$-alkyls there may be mentioned methyl, ethyl, n-propyl, iso-propyl, n-butyl, iso-butyl or sec-butyl.

As examples of $C_1$-$C_3$-alkoxys there may be mentioned methoxy, ethoxy, n-propoxy or iso-propoxy.

The compounds of Formula (2) are new and manufactured as follows:

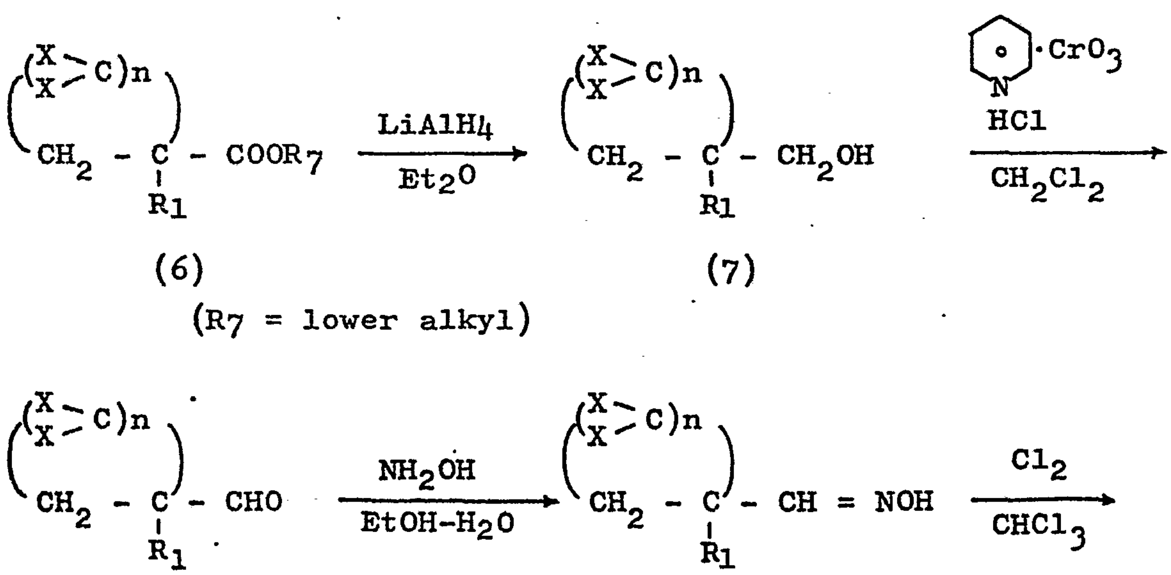


(6) (7)

(R7 = lower alkyl)

(8) (9)

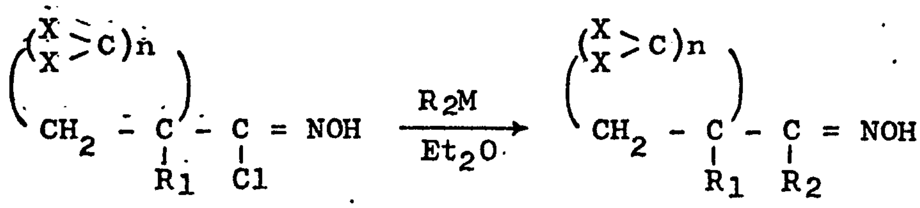


(10) (2)

First, a cycloalkanecarboxylic acid ester of Formula (6) can be reduced with a reductant such as lithiumalminium-hydride or diborane, in the presence of an ether solvent (diethyl ether, tetrahydrofuran, dioxane or dimethoxy ethane) at preferably 0 to 60°C to produce a cycloalkane methanol of Formula (7). The compounds of Formula (7) can be oxidized with an oxidant such as a complex of chromium oxide (tetravalent) and pyridine, in a solvent (dichlonomethane, pyridine or acetic acid) or in a mixture thereof, or manganese (IV) oxide in a solvent such as chloroform or acetonitrile at room temperature to produce a cycloalkane aldehyde of Formula (8).

A compound of Formula (8) can be allowed to react with a hydroxylamine (hydroxylamine hydrochloride or hydroxylamine sulfate) in water or alcohols (methanol or ethanol) preferably at 0~100°C to produce an oxime of Formula (9) [this compound corresponds to the compound of Formula (2) wherein $R_2$ is hydrogen].

A compound of Formula (9) is chlorinated with chlorine in halogenated hydrocarbons such as chloroform, dichloromethane

at -15 to 10°C to produce a compound of Formula (10).

A compound of Formula (10) is allowed to react with a compound of Formula $R_2M$ (wherein $R_2$ is $C_1$-$C_4$-alkylthio, $C_1$-$C_2$-monoalkylamino, $C_1$-$C_2$-dialkylamino or cyano and M is H, Na or K) in an organic solvent preferably at 0 to 50°C to produce an oxim of Formula (2) [this compound corresponds to the compound of Formula (2) (wherein $R_2$ is $C_1$-$C_4$-alkylthio, $C_1$-$C_2$-monoalkylamino, $C_1$-$C_2$-dialkylamino or cyano)].

The compound of Formula (6), which is a starting materials of the compound of Formula (2) (wherein $R_1$ is methyl, $R_5$ is ethyl, X is bromo, chloro and n is 1), is produced by the method of "Dehmlow, E.V., Ann. 785, 148 (1972)", that is, by reacting a methacrylic acid ester with dichloro carbene.

A compound of Formula (6) (wherein $R_1$ is hydrogen or methyl, X is fluoro and n is 2) is produced by the method of "D.D. Coffman et al., J. Am. Chem. Soc., 71, 490 (1949)", that is, tetrafluoro ethylene is allowed to react with an acrylic acid ester or methacrylic acid ester (cyclization - addition reaction) to produce a compound of Formula (6).

Furthermore, tetrafluoro-ethylene is allowed to react with acrolein or methacrolein (cyclization - addition reaction) to directly produce a compound of Formula (8) (wherein $R_1$ is hydrogen or methyl, X is fluoro and n is 2).

A compound of Formula (2) has two stereoisomers, that is, syn form and anti form. Therefore, a compound of Formula (1) has both syn form and anti form.

Preferable compounds of the present invention are those having the formula:

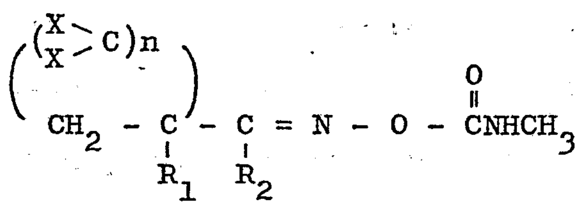

(1-a)

wherein $R_1$ is hydrogen or methyl, $R_2$ is hydrogen or $C_1 \sim C_4$ alkylthio, X is bromo, chloro or fluoro, n is 1 when X is bromo or chloro and n is 2 when X is fluoro.

Other preferable compounds of the present invention are those having Formula:

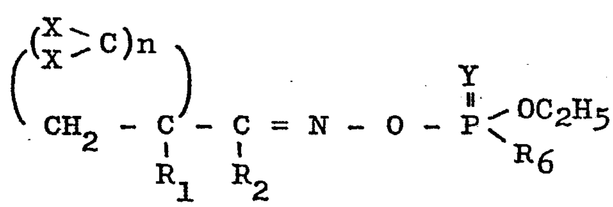

(1-b)

wherein $R_1$ is hydrogen or methyl, $R_2$ is $C_1 \sim C_4$ alkylthio, R6 is n-propylthio, sec-butylthio or ethoxy, Y is oxygen or sulfur, X is bromo chloro or fluoro, n is 1 when X is bromo or chloro and n is 2 when X is fluoro.

More preferable compounds of the present invention are those having Formula (1-a) wherein $R_1$ is hydrogen or methyl, $R_2$ is hydrogen or $C_1$-$C_3$-alkylthio, X is chloro or fluoro, n is 1 when X is chloro and n is 2 when X is fluoro.

Other more preferable compounds of the present invention are those having Formula (1-b) wherein $R_1$ is methyl, $R_2$ is $-SCH_3$ or $-SC_2H_5$, $R_6$ is n-propylthio or sec-butylthio, Y is oxygen or sulfur, X is chloro or fluoro, n is 1 when X is chloro and n is 2 when X is fluoro.

The most preferable compounds are the following compounds of the formula:

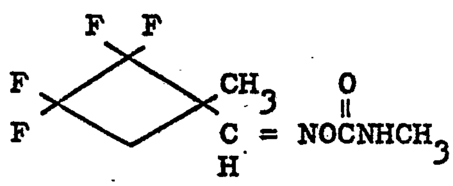

and

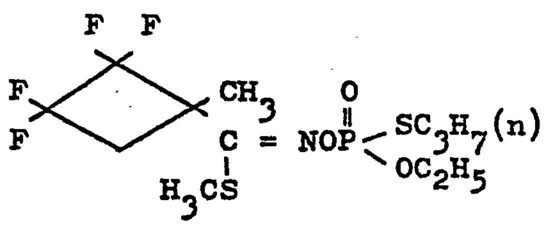

The present invention is illustrated in the following examples.

Synthesis example 1

Production of N-(methylaminocarbonyloxy) 2,2-dichloro-1-methylcyclopropanecarboxyimine (Compound No. 1):

Several drops of triethylamine and 2.6 ml of methylisocyanate were added to 50 ml of a dichloromethane solution containing 6.0 g of 2,2-dichloro-1-methylcyclopropanecarboxime at room temperature and the mixture was heated under reflux for 2 hours. The dichloromethane was distilled off from the reaction mixture under reduced pressure to separate out a solid.

It was recrystallized from benzene/n-hexane to obtain 7.6 g of the desired compound as a colorless crystalline solid.

Yield : 95%, m.p. : 94～95°C

Elementary analysis : $C_7H_{10}Cl_2N_2O_2$

Calculated C : 37.36, H : 4.48, N : 12.44

Found C : 37.45, H : 4.50, N : 12.41

Synthesis example 2

Production of methyl N-(phenylaminocarbonyloxy)-2,2-dichloro-1-methylcyclopropanecarboxyimidothioate (Compound No. 5):

Two drops of triethylamine and 0.69 g of phenylisocyanate were added to a 20 ml of dichloromethane solution containing 1.25 g of methyl N-(hydroxy)-2,2-dichloro-1-methylcyclopropanecarboxyimidothioate at room temperature and the mixture was heated under reflux for 2 hours.

The dichloromethane was distilled off from the reaction mixture under reduced pressure to separate out a solid.

It was recrystallized from benzene/n-hexane to obtain 1.54 g of the desired compound as a colorless crystalline solid.

Yield : 79.7%, m.p. : 133 ~135°C

Elementary analysis : $C_{13}H_{14}Cl_2N_2O_2S$

Calculated C : 46.86, H : 4.23, N : 8.41

Found C : 46.91, H : 4.25, N : 8.39

Synthesis example 3

Production of methylethyl N-(methylaminocarbonyloxy)-2,2,3,3-tetrafluorocyclobutanecarboxyimidothioate (Compound No. 15):

0.9 ml of methylisocyanate and 3 drops of triethylamine were added to 50 ml of a dichloromethane solution containing

2.3 g of methylethyl N-(hydroxy)-2,2,3,3-tetrafluorocyclobutanecarboxyimidothioate at room temperature and the mixture was stirred at room temperature for 4 hours. The dichloromethane was distilled off from the reaction mixture under reduced pressure to separate out a solid.

It was recrystallized from benzene/n-hexane to obtain 2.4 g of the desired compound as a pale yellow crystalline solid.

Yield : 84.5%, m.p. : 105~107°C

Elementary analysis : $C_{10}H_{14}F_4N_2O_2S$

Calculated C : 39.73, H : 4.67, N : 9.27

Found C : 39.69, H : 4.69, N : 9.30

Synthesis example 4

Production of N-(methylaminocarbonyloxy)-1-methyl-2,2,3,3-tetrafluorocyclobutanecarboxyiminonitrile (Compound No. 17):

1 ml of methylisocyanate and 3 drops of triethylamine were added to 30 ml of a dichloromethane solution containing 1.1 g of N-(hydroxy)-1-methyl-2,2,3,3-tetrafluorocyclobutanecarboxyiminonitrile and the mixture was stirred at room temperature for 3 hours. The dichloromethane was distilled off under reduced pressure to obtain an oil.

The oil was purified by column chromatography (silica gel: using a 1 : 1 mixture of dichloromethane/diethylether) and recrystallized from toluene/n-hexane to obtain 0.7 g of the desired compound as a colorless crystalline solid.

Yield : 50%, m.p. : 80.5~83°C

Elementary analysis : $C_9H_9F_4N_3O_2$

Calculated C : 40.46, H : 3.39, N : 15.73

Found C : 40.48, H : 3.38, N : 15.76

Synthesis example 5

Production of ethyl N-(methylaminocarbonyloxy)-2,2,3,3-tetrafluorocyclobutanecarboxyimidoamidate (Compound No. 21):

2 ml of methylisocyanate and 5 drops of triethylamine were added to 50 ml of a dichloromethane solution containing 3.0 g of ethyl N-(hydroxy)-2,2,3,3-tetrafluorocyclobutane-carboxyimideamidate and the mixture was stirred for 4 hours. The dichloromethane was distilled off from the reaction mixture under reduced pressure to separate out a solid.

It was recrystallized from benzene/n-hexane to obtain 2.9 g of the desired compound as a colorless crystalline solid.

Yields : 77.6%, m.p. : 86～88°C

Elementary analysis : $C_{10}H_{15}F_4N_3O_2$

Calculated C : 42.11, H : 5.30, N : 14.73

Found C : 42.13, H : 5.31, N : 14.70

Synthesis example 6

Production of N-(dimethylaminocarbonyloxy)-1-methyl-2,2,3,3-tetrafluorocyclobutanecarboxyimine (Compound No. 24):

0.85 g of sodium hydride (55% oil dispersion) was added to 30 ml of diethylether. The above suspension was added 3.0 g of 1-methyl-2,2,3,3-tetrafluorocyclobutanecarboxime and in order to get good stirring 5 ml of tetrahydrofuran was also added. The solution was cooled to under 10°C and 3.5 g of N,N-dimethylcarbamoyl chloride was added thereto. After the mixture was stirred for 2 hours at room temperature, 20 ml of a saturated aqueous solution of ammonium chloride was added and extracted with dichloromethane. The dichloromethane layer was washed with a 5% aqueous solution of sodium carbonate, then with an aqueous solution of sodium chloride. After the solvent was distilled off, the residue was recrystallized from benzene/n-hexane to obtain 3.1 g of the desired compound as a colorless crystalline solid.

Yield : 72.3%, m.p. : 70~71.5°C

Elementary analysis : $C_9H_{12}F_4N_2O_2$

Calculated C : 42.19, H : 4.72, N : 10.93

Found C : 42.18, H : 4.69, N : 10.93

In accordance with the methods of 1~5, the other compound of Formula (11) shown in Table 1. were obtained.

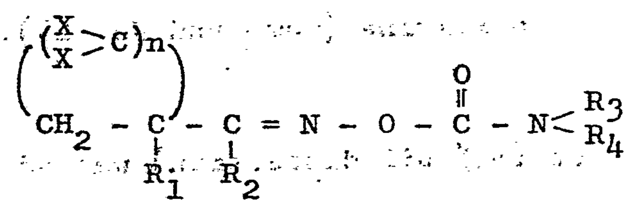

(11)

Table 1.

| Compound No. | Substituent of Formula (11) | | | | | | m.p. or refractive index | Appearance |
|---|---|---|---|---|---|---|---|---|
| | R1 | R2 | R3 | R4 | X | n | | |
| 1 | $CH_3$ | H | $CH_3$ | H | Cl | 1 | 94 ~ 95 °C | Colorless crystal |
| 2 | $CH_3$ | H | $C_2H_5$ | H | Cl | 1 | $n_D^{25}$ 1.5019 | Colorless oil |
| 3 | $CH_3$ | $SCH_3$ | $CH_3$ | H | Cl | 1 | 59 ~ 61.5 °C | Colorless crystal |
| 4 | $CH_3$ | $SC_3H_7$(i) | $CH_3$ | H | Cl | 1 | $n_D^{25}$ 1.5245 | Pale yellow oil |
| 5 | $CH_3$ | $SCH_3$ | 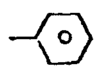 | H | Cl | 1 | 133 ~ 135 °C | Colorless crystal |
| 6 | $CH_3$ | $N(CH_3)_2$ | $CH_3$ | H | Cl | 1 | 87 ~ 90 °C | Colorless crystal |
| 7 | $CH_3$ | H | $CH_3$ | H | F | 2 | 71 ~ 74 °C | Pale yellow crystal |
| 8 | $CH_3$ | $SCH_3$ | $CH_3$ | H | F | 2 | 91 ~ 92 °C | Colorless crystal |
| 9 | $CH_3$ | $SC_2H_5$ | $CH_3$ | H | F | 2 | 88 ~ 89 °C | Colorless crystal |
| 10 | $CH_3$ | $SC_3H_7$(i) | $CH_3$ | H | F | 2 | 89 ~ 91 °C | Colorless crystal |
| 11 | $CH_3$ | $SC_4H_9$(t) | $CH_3$ | H | F | 2 | 93 ~ 95 °C | Colorless crystal |

| Compound No. | Substituent of Formula (II) | | | | | | m.p. or refractive index | Appearance |
|---|---|---|---|---|---|---|---|---|
| | $R_1$ | $R_2$ | $R_3$ | $R_4$ | X | n | | |
| 12 | $CH_3$ | $SCH_3$ | 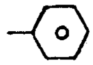 | H | F | 2 | 85~88°C | Colorless crystal |
| 13 | H | $SCH_3$ | $CH_3$ | H | F | 2 | 142~144°C | Colorless crystal |
| 14 | H | $SC_2H_5$ | $CH_3$ | H | F | 2 | 156~158°C | Pale yellow crystal |
| 15 | H | $SC_3H_7$(i) | $CH_3$ | H | F | 2 | 105~107°C | Pale yellow crystal |
| 16 | H | $SC_4H_9$(t) | $CH_3$ | H | F | 2 | 101~104°C | Pale yellow crystal |
| 17 | $CH_3$ | -CN | $CH_3$ | H | F | 2 | 80.5~83°C | Colorless crystal |
| 18 | $CH_3$ | $SC_3H_7$(n) | $CH_3$ | H | F | 2 | 74.5~76°C | Colorless crystal |
| 19 | H | $SC_3H_7$(n) | $CH_3$ | H | F | 2 | 145~147°C | Colorless crystal |
| 20 | $CH_3$ | $-NHCH_3$ | $CH_3$ | H | F | 2 | 109~112°C | Colorless crystal |
| 21 | $CH_3$ | $-NHC_2H_5$ | $CH_3$ | H | F | 2 | 86~88°C | Colorless crystal |
| 22 | $CH_3$ | H | $C_2H_5$ | H | F | 2 | $n_D^{25}$ 1.4311 | Colorless oil |

| Compound No. | Substituent of Formula (11) | | | | | | m.p. or refractive index | Appearance |
|---|---|---|---|---|---|---|---|---|
| | $R_1$ | $R_2$ | $R_3$ | $R_4$ | X | n | | |
| 23 | $CH_3$ | H | $C_3H_7(n)$ | H | F | 2 | $n_D^{25}$ 1.4318 | Pale yellow oil |
| 24 | $CH_3$ | H | $CH_3$ | $CH_3$ | F | 2 | 70 ~71.5°C | Colorless crystal |
| 25 | $CH_3$ | H | $CH_3$ | $CH_3$ | Br | 2 | 88~89°C | Pale yellow crystal |
| 26 | $CH_3$ | H | $CH_3$ | H | Br | 2 | $n_D^{25}$ 1.5493 | Pale yellow oil |

Synthesis example 7

Production of O-[1-methylthio-(1'-methyl-2',2'-dichlorocyclopropyl) methylideneamino]-O,O-dimethyl phosphorothioate (Compound No. 27):

A mixture of 3.1 g of methyl N-(hydroxy)-2,2-dichloro-1-methylcyclopropanecarboxyimidethioate, 2.03 g of a 30% aqueous solution of NaOH and 15 ml of dichloromethane was vigorously stirred. 2 drops of a 50% aqueous solution of tetrabutylammoniumbromide were added to the above solution and 1.76 ml of O,O-dimethyl chlorothiophosphate was added dropwise at room temperature over 10 minutes. Then the mixture was heated under reflux for 1.5 hours. The reaction mixture was cooled, poured into water and extracted with dichloromethane. The dichloromethane layer was washed with a 5% aqueous solution of hydrochloric acid, a 5% aqueous solution of sodium hydroxide and then with water. Afterward, the dichloromethane was distilled off to obtain 4.57 g of a crude oil.

The crude oil was purified by column chromatography (Silica gel 150 g: using a 1 : 1 mixture of ethyl acetate/n-hexane) to obtain 3.92 g of the desired compound as a colorless crystalline solid.

Yield : 80%, m.p. : 52~53.5°C (after recrystallization from n-hexane)

Elementary analysis : $C_8H_{14}Cl_2NO_3PS_2$

Calculated C : 28.41, H : 4.17, N : 4.14

Found C : 28.37, H : 4.18, N : 4.12

$^1$H-N.M.R. spectrum :

$\delta$ ($CCl_4$) 1.52 (d, 1H, J=8Hz), 1.54 (s, 3H), 2.32 (d, 1H, J=8Hz), 2.57 (s, 3H), 3.71, 3.84 (d, 6H, J=13Hz)

Synthesis example 8

Production of O-[1-dimethylamino-(1'-methyl-2',2',3',3'-tetrafluorocyclobutyl) methylideneamino]-O-ethyl-S-n-propyl phosphorothioate (Compound No. 51):

A mixture of 2.98 g of dimethyl N-hydroxy-1-methyl-2,2,3,3-tetrafluoro-cyclobutanecarboxyimideamidate, 1.83 g of a 30% aqueous solution of sodium hydroxide and 15 ml of dichloromethane was stirred vigorously. 2 drops of a 50% aqueous solution of tetrabutylammoniumbromide were added to the mixture and then 2.85 g of O-ethyl-S-n-propyl chlorothiophosphate was added dropwise to the mixture. The whole was heated under refulux for 2 hours. The reaction mixture was cooled, poured into water and extracted with dichloromethane. The dichloromethane layer was washed with a 5% aqueous solution of hydrogen chloride, washed with

a 5% aqueous solution of sodium hydroxide and then with water. Afterward, the solvent was distilled off to obtain 3.5 g of a crude oil. The crude oil was purified by column chromatography (Silica gel 150 g : using 1 : 5 mixture of toluene/n-hexane) to obtain 3.22 g of the desired compound (Yield : 60.3%) as a pale yellow oil, $n_D^{25}$ 1.4932.

Elementary analysis : $C_{13}H_{23}F_4N_2O_2PS_2$

Calculated C : 38.04, H : 5.65, N : 6.82

Found C : 38.06, H : 5.66, N : 6.82

$^1$H-N.M.R. spectrum :

$\delta$ ($CCl_4$) 1.00 (t, 3H, J=8Hz), 1.36 (t, 3H, J=8Hz), 1.56 (s, 3H), 1.72 (q, 2H), 2.57 3.28 (m, 2H), 2.75 (s, 3H), 2.84, 3.02 (d, t, 2H, J=18Hz, 8Hz), 4.19, 4.24 (d, q, 2H, J=5Hz, 8Hz)

In accordance with the methods of Synthesis examples 7 and 8, the other compounds of Formula (12) as shown in Table 2 were obtained.

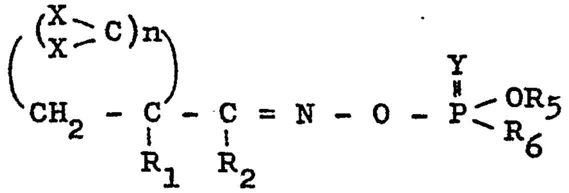

(12)

Table 2

| Compound No. | Substituent of Formula (12) | | | | | | | m.p. or refractive index | Appearance |
|---|---|---|---|---|---|---|---|---|---|
| | $R_1$ | $R_2$ | $R_5$ | $R_6$ | X | Y | n | | |
| 27 | $CH_3$ | $SCH_3$ | $CH_3$ | $OCH_3$ | Cl | S | 1 | 52～53.5°C | Colorless crystal |
| 28 | $CH_3$ | $SCH_3$ | $C_2H_5$ | $OC_2H_5$ | Cl | S | 1 | 49～50°C | Colorless crystal |
| 29 | $CH_3$ | $SCH_3$ | $C_2H_5$ | $SC_3H_7(n)$ | Cl | S | 1 | $n_D^{25}$ 1.5610 | Colorless oil |
| 30 | $CH_3$ | $SCH_3$ | $C_2H_5$ | $SC_4H_9(s)$ | Cl | S | 1 | $n_D^{25}$ 1.5545 | Pale yellow oil |
| 31 | $CH_3$ | $SC_3H_7(i)$ | $C_2H_5$ | $SC_3H_7(n)$ | Cl | S | 1 | $n_D^{25}$ 1.5436 | Clorless oil |
| 32 | $CH_3$ | $SCH_3$ | $C_2H_5$ | $SC_3H_7(n)$ | Cl | O | 1 | $n_D^{25}$ 1.5158 | Pale yellow oil |
| 33 | $CH_3$ | $NHCH_3$ | $C_2H_5$ | $SC_3H_7(n)$ | Cl | S | 1 | $n_D^{25}$ 1.5450 | Pale yellow oil |
| 34 | $CH_3$ | $N(CH_3)_2$ | $C_2H_5$ | $SC_3H_7(n)$ | Cl | O | 1 | $n_D^{25}$ 1.5080 | Pale yellow oil |
| 35 | $CH_3$ | CN | $C_2H_5$ | $SC_3H_7(n)$ | Cl | S | 1 | $n_D^{25}$ 1.5312 | Pale yellow oil |
| 36 | H | $SCH_3$ | $C_2H_5$ | $SC_3H_7(n)$ | H | S | 1 | $n_D^{25}$ 1.5565 | Pale yellow oil |
| 37 | $CH_3$ | $SCH_3$ | $C_2H_5$ | $OC_2H_5$ | F | S | 2 | $n_D^{25}$ 1.4682 | Pale yellow oil |

| Compound No. | Substituent of Formula (12) | | | | | | | m.p. or refractive index | Appearance |
|---|---|---|---|---|---|---|---|---|---|
| | $R_1$ | $R_2$ | $R_5$ | $R_6$ | X | Y | n | | |
| 38 | $CH_3$ | $SC_2H_5$ | $C_2H_5$ | $OC_2H_5$ | F | S | 2 | $n_D^{25}$ 1.4628 | Pale yellow oil |
| 39 | $CH_3$ | $SC_3H_7$(n) | $C_2H_5$ | $OC_2H_5$ | F | S | 2 | $n_D^{25}$ 1.4592 | Pale yellow oil |
| 40 | $CH_3$ | $SC_3H_7$(i) | $C_2H_5$ | $OC_2H_5$ | F | S | 2 | $n_D^{25}$ 1.4572 | Pale yellow oil |
| 41 | $CH_3$ | $SCH_3$ | $C_2H_5$ | $SC_3H_7$(n) | F | S | 2 | $n_D^{25}$ 1.4895 | Pale yellow oil |
| 42 | $CH_3$ | $SC_2H_5$ | $C_2H_5$ | $SC_3H_7$(n) | F | S | 2 | $n_D^{25}$ 1.4810 | Pale yellow oil |
| 43 | $CH_3$ | $SC_3H_7$(n) | $C_2H_5$ | $SC_3H_7$(n) | F | S | 2 | $n_D^{25}$ 1.4802 | Pale yellow oil |
| 44 | $CH_3$ | $SC_3H_7$(i) | $C_2H_5$ | $SC_3H_7$(n) | F | S | 2 | $n_D^{25}$ 1.4720 | Pale yellow oil |
| 45 | $CH_3$ | $SCH_3$ | $CH_3$ | $OCH_3$ | F | S | 2 | $n_D^{25}$ 1.4752 | Colorless oil |
| 46 | $CH_3$ | $SCH_3$ | $C_2H_5$ | $SC_4H_9$(s) | F | S | 2 | $n_D^{25}$ 1.4850 | Colorless oil |
| 47 | $CH_3$ | $NHCH_3$ | $C_2H_5$ | $OC_2H_5$ | F | S | 2 | $n_D^{25}$ 1.4612 | Pale yellow oil |
| 48 | $CH_3$ | $NHCH_3$ | $C_2H_5$ | $SC_3H_7$(n) | F | S | 2 | $n_D^{25}$ 1.4920 | Pale yellow oil |
| 49 | $CH_3$ | $SCH_3$ | $C_2H_5$ | $SC_3H_7$(n) | F | O | 2 | $n_D^{25}$ 1.4698 | Pale yellow oil |

| Compound No. | Substituent of Formula (12) | | | | | | | m.p. or refractive index | Appearance |
|---|---|---|---|---|---|---|---|---|---|
| | R1 | R2 | R5 | R6 | X | Y | n | | |
| 50 | $CH_3$ | $NHC_2H_5$ | $C_2H_5$ | $SC_3H_7(n)$ | F | S | 2 | $n_D^{25}$ 1.4833 | Pale yellow oil |
| 51 | $CH_3$ | $N(CH_3)_2$ | $C_2H_5$ | $SC_3H_7(n)$ | F | S | 2 | $n_D^{25}$ 1.4932 | Pale yellow oil |
| 52 | $CH_3$ | CN | $C_2H_5$ | $SC_3H_7(n)$ | F | O | 2 | $n_D^{25}$ 1.4442 | Pale yellow oil |
| 53 | H | $SCH_3$ | $C_2H_5$ | $SC_3H_7(n)$ | F | S | 2 | $n_D^{25}$ 1.5070 | Pale brown oil |
| 54 | H | $SCH_3$ | $C_2H_5$ | $SC_3H_7(n)$ | H | S | 2 | $n_D^{25}$ 1.5570 | Pale yellow oil |
| 55 | $CH_3$ | $SCH_3$ | n-$C_4H_9$ | $SC_3H_7(n)$ | Cl | S | 1 | $n_D^{25}$ 1.5452 | Colorless oil |
| 56 | $CH_3$ | $SCH_3$ | n-$C_3H_7$ | $OC_3H_7(n)$ | Cl | O | 1 | $n_D^{25}$ 1.4904 | Pale yellow oil |
| 57 | $CH_3$ | $SCH_3$ | $C_2H_5$ | $SC_4H_9$(Se ) | F | O | 2 | $n_D^{25}$ 1.4709 | Colorless oil |
| 58 | $CH_3$ | $SCH_3$ | $C_2H_5$ | $C_3H_7(n)$ | Br | O | 1 | $n_D^{25}$ 1.5503 | Pale brown oil |
| 59 | $CH_3$ | $SCH_3$ | $C_2H_5$ | $C_3H_7(n)$ | Br | S | 1 | $n_D^{25}$ 1.5781 | Pale yellow oil |

The following are examples of production of the compounds of Formula (2) which are intermediates of the compounds of Formula (1).

Reference example 1

Production of methyl N-hydroxy-2,2-dichloro-1-methylcyclopropanecarboxyimidethioate of the formula:

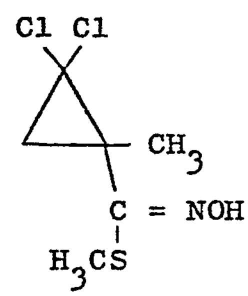

(1) One of the starting material 2,2-dichloro-1-methylcyclopropane carboxylic acid ethyl ester (one of the compounds of Formula (6)) was produced by the method of "Dehmlow, E.V., Ann. 785, 148 (1972), that is reacting methacrylic acid ethyl ester with dichloro carbene (addition reaction).

B.p. of this compound was 91～93°C/22 mmHg.

(2) 2,2-dichloro-1-methylcyclopropyl methanol (one of the compounds of Formula (7)) was produced as follows:

100 ml of an ethyl ether solution containing 130 g of 2,2-dichloro-1-methylcyclopropane carboxylic acid ethyl ester, which was produced by the above method (1), was added dropwise to a suspension consisting of 600 ml of ethyl ether and 19 g of lithium aluminium hydride over 30 minutes, furthermore, the mixture was stirred for 2.5 hours. The reaction mixture was added dropwise to 70 ml of cold water and stirred for 1 hr. at room temperature. Then, the organic phase was washed with water, an aqueous solution of sodium chloride and the ethyl ether was distilled off under reduced pressure to obtain 96.3 g of the desired compound.

B.p. : 91～93°C/23 mmHg, Yield : 94%

(3) 2,2-dichloro-1-methylcyclopropanealdehyde (one of the compounds of Formula (8)) was produced as follows:

31 g of 2,2-dichloro-1-methylcyclo-propylmethanol, which was obtained by the above method (2), was added at a time to the suspension consisting of 400 ml of dichloromethane and 64.7 g of pyridinium chlorochromate. After the mixture was stirred at room temperature for 2 hours, 400 ml of ethyl ether was added to the mixture. The supernatant solution was separated from the mixture and the black residue was washed with 100 ml ethyl ether three times. The ether solution were combined to one,

then it was gone through the short column chromatography (Silica gel) and the solvent was distilled off to obtain 26 g of the desired compound.

(4) 2,2-dichloro-1-methylcyclopropanecarboxime (one of the compounds of Formula (9)) was obtained as follows:

After 23.6 g of hydroxylamine hydrochloride was dissolved in 100 ml of water, it was added 57 g of a 25% aqueous solution of sodium hydroxide and 120 ml of ethanol. A 40 ml of ethanol solution containing 26 g of 2,2-dichloro-1-methylcyclopropanealdehyde, which was obtained by the above method (3), was added dropwise to the above mixture at room temperature. After the whole was heated under reflux for two hours, the reaction mixture was cooled to room temperature, 200 ml of water was added to the reaction mixture and extracted with ethyl ether two times. The ether layer was dried over anhydrous sodium sulfate. The ether was distilled off under reduced pressure to obtain the crude oxime.

The crude oxime was recrystallized from benzene/n-hexane to obtain 22.9 g (m.p. : 63~65°C) of the desired compound.

Elementary analysis : $C_5H_7Cl_2NO$

Calculated C : 35.74, H : 4.20, N : 8.34

Found C : 35.77, H : 4.21, N : 8.32

(5) N-hydroxy-2,2-dichloro-1-methylcyclopropanecarboxyimide chloride (one of the compounds of Formula (10)) was obtained as follows:

4 g of a gaseous chlorine was blown into 50 ml of a chloroform solution containing 8.4 g of 2,2-dichloro-1-methylcyclopropanecarboxime, which was obtained by the method (4), over 30 minutes. The color of the reaction mixture turned blue during the reaction. After the finish of blowing of the gaseous chlorine, the reaction mixture was stirred for 30 minutes. The chloroform was distilled off under reduced pressure below 40°C.

Then, 40 ml of ethyl ether was added to the reaction mixture and the ether was distilled off under reduced pressure below 40°C to obtain 10.5 g of the desired compound.

$^1$H-N.M.R. ($CDCl_3$) : δ=1.54 (d, J=8Hz, 1H, cyclopropane ring H) ; 1.62 (s, 3H, $CH_3$) ; 2.23 (d, J=8Hz, 1H, cyclopropane ring H) ; 8.45 (bs, 1H, OH)

(6) Methyl N-hydroxy-2,2-dichloro-1-methylcyclopropanecarboxyimidethioate (one of the compounds of Formula (2)) was obtained as follows:

3.0 g of N-hydroxy-2,2-dichloro-1-methylcyclopropanecarboxyimide chloride, which was obtained by the method (3), was added to 20 ml of a methanol solution containing 6.9 g of sodium thiomethylate (a 15% aqueous solution) at room temperature. After the mixture was stirred for 2 hours at room temperature, 50 ml of water and a small amount of a 5% aqueous solution of sulfuric acid were added to make the mixture acidic and extracted with ethyl ether. The organic layer was washed with water and then with an aqueous solution of sodium chloride. Afterward, the ether was distilled off to obtain 2.8 g of the desired compound. (Yield : 88%, m.p. : 105~107°C)

$^1$H-N.M.R. ($CDCl_3$) : $\delta$ =1.46 (d, J=8Hz, 1H, cyclopropane ring H) ; 1.59 (s, 3H, $CH_3$) ; 2.11 (d, J=8Hz, 1H, cyclopropane ring H) ; 2.54 (s, 3H, $SCH_3$) ; 9.18 (bs, 1H, OH)

Elementary analysis : $C_6H_9Cl_2NOS$

Calculated C : 33.66, H : 4.24, N : 6.54

Found C : 33.67, H : 4.27, N : 6.52

Reference example 2

Production of isopropyl N-hydroxy-2,2,3,3-tetrafluorocyclobutanecarboxyimidethioate of the formula :

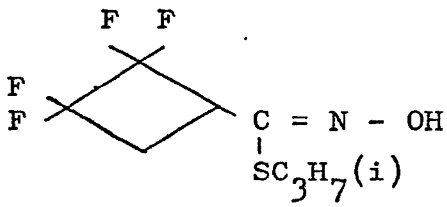

(1) The starting material, 2,2,3,3-tetrafluorocyclobutane aldehyde, which is one of the compounds of Formula (8), was obtained by the method of "D.D. Coffman, J. Am. Chem. Soc., 79, 490 (1949)", that is, reacting acrolein with tetrafluoroethylene (addition-cyclization reaction under heating). B.p. : 116～118°C/760 mmHg.

(2) 2,2,3,3-tetrafluorocyclobutanecarboxime (which is one of the compounds of Formula (9)) was obtained as follows:

13.9 g of hydroxylamine hydrochloride was dissolved in 60 ml of water. After 26.7 g of a 30% aqueous solution of sodium hydroxide and 100 ml of ethanol were added to the above solution, 15.6 g of 2,2,3,3-tetrafluorocyclobutanealdehyde, which was obtained by the method (1), was added to the solution at room temperature. The whole was heated under reflux for 2 hours and cooled to room temperature. Then 200 ml of water was added thereto and extracted with ethyl ether twice. The ether layer was dried over anhydrous sodium sulfate and the ether was distilled off under reduced pressure to obtain 14.7 g

of the desired compound.

$^1$H-N.M.R. ($CDCl_3$) : $\delta$=2.06~3.20 (m, 2H, $-CH_2-$) ; 3.20~4.25 (m, 1H, -CH-) ; 6.43, 7.51 (d, d, J=6Hz, 1H, -CH=) ; 9.57 (bs, 1H, -OH)

(3) N-hydroxy-2,2,3,3-tetrafluorocyclobutanecarboxyimide chloride was obtained as follows:

6.1 g of gaseous chlorine was blown into the 100 ml of chloroform solution containing 14.7 g of 2,2,3,3-tetrafluorocyclobutanecarboxime, which was obtained by the above method (2), below 0°C over 30 minutes. During the reaction the color of the reaction solution turned blue. After the finish of blowing of the gaseous chlorine, the reaction mixture was stirred for 30 minutes at the same temperature. The chloroform was distilled off under reduced pressure below 40°C. 50 ml of ethyl ether was added to the mixture and the ether was distilled off under reduced pressure below 40°C to obtain 17.6 g of the desired compound as a pale yellow oil.

$^1$H-N.M.R. ($CCl_4$) : $\delta$=2.30~3.30 (m, 2H, $-CH_2-$) ; 3.40~3.90 (m, 1H, -CH) ; 9.75 (s, 1H, OH).

(4) Isopropyl N-hydroxy-2,2,3,3-tetrafluorocyclobutanecarboximidethioate was produced as follows:

To an ethyl ether solution containing 3.1 g of N-hydroxy-2,2,3,3-tetrafluorocyclobutanecarboxyimide chloride, which was obtained by the above method (3) was added 1.4 ml of isopropyl mercaptane and then added dropwise 30 ml of an ether solution containing 2.5 ml of triethyl amine. Triethylamine hydrochloride was precipitated simultaneously with adding dropwise. After stirring 3 hours, the reaction mixture was poured into a diluted aqueous sulfuric acid containing ice and extracted with ethyl ether twice. The organic layer was washed with a 5% aqueous solution of sodium carbonate and with an aqueous solution of sodium chloride. After distilling off the ether, 3 g of a residual solid was recrystallized from toluene/n-hexane and 1.7 g of the desired compound was obtained as a colorless needle-like crystalline solid.

Elementary analysis : $C_8H_{11}F_4NOS$

Calculated C : 39.18, H : 4.52, N : 5.71

Found C : 39.20, H : 4.55, N : 5.69

Reference example 3

Production of N-hydroxy-2,2,3,3-tetrafluoro-1-methyl-cyclobutanecarboxyiminonitrile of the formula:

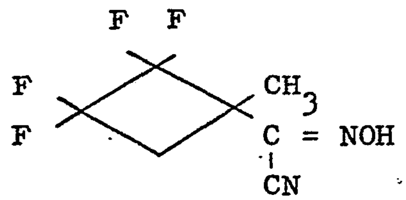

0.98 g of sodium cyanide was dissolved in 2 ml of water and 4 g of N-hydroxy-2,2,3,3-tetrafluoro-1-methylcyclobutanecarboxyimide chloride was added dropwise to the above solution. After stirring 2 hours, 100 ml of water was added to the mixture. Then it was acidified with hydrochloric acid and extracted with dichloromethane twice.

The organic layer was washed with an aqueous solution of sodium chloride twice. Then the dichloromethane was distilled off to obtain 3.6 g of a crude crystalline solid. It was recrystallized from toluene/n-hexane to obtain 1.7 g of the desired compound as colorless needle-like crystalline solid.

M.p. : 84~86°C

Elementary analysis : $C_7H_6F_4N_2O$

Calculated C : 39.97, H : 2.88, N : 13.33

Found C : 39.99, H : 2.91, N : 13.30

Reference example 4

Production of ethyl N-hydroxy-2,2,3,3-tetrafluoro-1-methylcyclobutanecarboxyimideamidate of the formula:

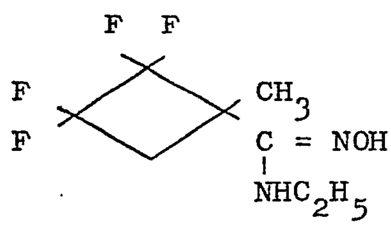

3.6 ml of a 70% aqueous solution of ethylamine was added to 30 ml of an ethyl ether solution containing 3.3 g of N-hydroxy-2,2,3,3-tetrafluoro-1-methylcyclobutanecarboxyimide chloride below 10°C. The mixture was stirred at room temperature for 3 hours.

After 50 ml of water was added to the reaction mixture, it was neutralized with a 5% aqueous solution of hydrochloride and a 5% aqueous solution of sodium carbonate. Then it was extracted with ethyl ether twice.

The organic layer was washed with an aqueous solution of sodium chloride, dried over anhydrous sodium sulfate. The ether was distilled off to obtain 3.0 g of a solid. It was recrystallized from toluene/n-hexane to give 1.5 g of the desired compound as a colorless needle-like crystalline solid.

M.p. : 94~95°C

Elementary analysis : $C_8H_{12}F_4N_2O$

Calculated C : 42.11, H : 5.30, N : 12.27

Found C : 42.08, H : 5.30, N : 12.30

The insecticides and acaricides of the present invention are effective on the followings; HEMIPTERA such as Nephotettix cincticeps, Sogatella furcifera, Nilaparvata lugens, Laoderphax striatellus, Riptortus clavatus, Nezara viridula, Stephanitis nashi, Trialeurodes vaporariorum, Aphis gossypii, Myzus persicae, and Unaspis yanonensis; LEPIDOPTERA such as Phyllonorycter ringoniella, Plutella xylostella, Promalactis inonisema, Adoxophyes orara, Leguminivora glycinivorella, Cnaphalocrocis medinalis, Chilo suppressalis, Ostrinia furnacalis, Mamestra brassicae, Pseudaletia separata, Spodoptera litura, Parnara guttata, and Pieris rapae crucivora; COLEOPTERA such as Anomala cuprea, Popillia japonica, Echinocnemus squameus, Lissorhoptrus oryzophilus, Oulema oryzae, Anthrenus verbasci, Tenebrioides mauritanicus, Sitophilus zeamais, Henosepilachna vigintioctopunctata, Callosobruchus chinensis, Monochamus alternatus, and Aulacophora femoralis; HYMENOPTERA such as Athalia rosae japonensis and Arge similis; DIPTERA such as Culex pipiens fatigans, Aedes aegypti, Asphondylia sp., Hylemya platura, Musca domestica vicina, Dacus cucurbitae,

and Agremyza oryzae; APHANIPTERA such as Pulex irritans, Xenopsylla cheopis, and Ctenocephalides canis; THYSANOPTERA such as Scirtothrips dorsalis, Thrips tabaci, and Baliothrips biformis; ANOPLURA such as Pediculus humanus corporis and Phthirus pubis; PSOCOPTERA such as Trogium pulsatorium and Liposcelis bostrychophilus; ORTHOPTERA such as Gryllotalpa africana, Locusta migratoria, Oxya japonica, Blattella germanica, and Periplaneta fuliginosa; and ACARINA such as Tetranychus urticae, Panonychus citri, Tetranychus telarius, Tetranychus Kanzawai, and Rhizoglyphus echinopus.

The compounds of the present invention may be used alone if desired, but they are generally formulated by blending suitable adjuvants to improve or stabilize the effects thereof and used as such or diluted prior to use if necessary. The compounds of the invention can be formulated in the conventional manners well-known in the art in any convenient form such as dust, granule, micro granule, wettable powder, flowable, emulsion, microcapsule, oil, aerosol, heating fumigant (e.g. mosquitorepellent of an incense type or electric type) fuming agent such as fogging, non-heating fumigant, or toxic feed.

Examples of said adjuvants are carrier (i.e. diluent) and other adjuvants such as a spreader, emulsifying agent, wetting agent, dispersing agent, fixing agent, or disintegrator. Examples of liquid carrier are aromatic hydrocarbons

such as toluene or xylene; alcohols such as methanol, butanol, or glycol; ketones such as acetone; amides such as dimethylformamide; sulfoxides such as dimethyl sulfoxide; methylnaphthalene, cyclohexane, animal or vegetable oils, fatty acids, fatty acid esters or the like as well as petroleum distillates such as kerosine or gas oil.

Examples of solid carrier are clay, kaolin, talc, kieselguhr, silica, calcium carbonate, montmorillonite, bentonite, feldspar, quartz, alumina, or saw dust.

Surfactants are generally used as an emulsifying or dispersing agent. Examples of them are anionic, cationic, nonionic and ampholytic surfactants such as sodium salt of higher alcohol sulfate, stearyltrimethylammonium chloride, polyoxyethylene alkylphenyl ether or laurylbetaine.

Examples of spreaders are polyoxyethylene nonylphenyl ether, polyoxyethylene lauryl ether etc. Examples of wetting agents are polyoxyethylene nonylphenyl ether, dialkyl sulfosuccinate etc. Examples of fixing agents are carboxymethylcellulose, polyvinyl alcohol etc. Examples of disintegrators are sodium ligninsulfonate, sodium lauryl sulfate etc.

Furthermore, it is possible to blend two or more compounds of the present invention to obtain an improved insecticidal and acaricidal characteristics. In addition, it is also

possible to use a compound of the present invention simultaneously with other physiologically active substances such as pyrethroids (e.g. allethrin, phthalthrin, permethrin, decamethrin, fenvalerate, α-cyano-3-phenoxybenzyl 2,2-dichloro-1-(4-ethoxyphenyl)-1-cyclopropane carboxylate and various isomers thereof), pyrethrum extract, organophosphorus pesticides (e.g. DDVP, fenitrothion, diazinon, or temefos), carbamate pesticides (e.g. Carbaryl, MTMC, BPMC, or pirimicarb), and other pesticides or acaricides, bactericides, nematicides, herbicides, plant growth regulators, microbial pesticides (e.g. BT or DCV), fertilizers, insect hormones, and other pesticides, thereby affording a multipurpose composition which exhibits an improved effect and further a synergistic effect, if things go well.

It is further possible to increase the effect of the composition several-fold by adding synergists for pyrethroids, such as piperonyl butoxide, sulfoxide or safroxane.

Although the compounds of the present invention are stable to light, heat, oxidation etc., antioxidant or ultraviolet absorber such as phenol (e.g. BHT or BHA), arylamine (e.g. α-naphthylamine), or benzophenone compound may be added as a stabilizer to prepare a composition which exhibits a higher stability, if desired.

The content of active ingredients in the composition of

the present invention depends on the conditions to use such as preparation form, application method or the like, and is usually from 0.2 to 95 wt% (preferably from 0.5 to 80 wt%), although the active ingredients may be used alone in a special case.

The compositions of the present invention may be used in an amount which depends on the conditions such as preparation form, time and method for application or the like. Generally it is used in an amount of 10 to 300 g/10 a, and preferably 15 to 200 g/10 a (in terms of the active ingredient) for the control of ornamental, forest or livestock insect pests, and in an amount of 2 to 200 $mg/m^2$, preferably 5 to 100 $mg/m^2$ (in terms of the active ingredient) for the purpose of exterminating hygienic insect pests. For example, from 15 to 120 g/10 a of the active ingredient is used in the case of dust, 30 to 240 g/10 a thereof is used in the case of granule and 40 to 250 g/10 a thereof is used in the case of emulsion or wettable powder. However, it may be possible, or even necessary to use the active ingredient in an amount which is above or below the ranges as specified above, in a special case.

While the following examples are given to further illustrate the present invention, it is to be understood that the kind and proportion of the adjuvants are not specifically limited thereto but wide variations are possible. Unless otherwise

stated, amounts are expressed as parts by weight.

Formulation example 1: Emulsion

20 parts of a compound of the formula (I) is dissolved in 65 parts of a xylene/methylnaphthalene mixture. Then 15 parts of an 8 : 2 mixture of an alkylphenolethylene oxide condensate and calcium alkylbenzensulfonate is mixed with said solution to prepare an emulsion. The resulting emulsion may be used as a spreading agent by diluting with water.

Formulation example 2: Wettable powder

10 parts of a compound of the formula (I) is mixed with 45 parts of kaolin, 30 parts of clay and 7.5 parts of kieselguhr. Then 7.5 parts of a 1 : 1 mixture of sodium laurate and sodium dinaphtylmethanesulfonate is added to the mixture and finely ground to prepare a powder. The resulting powder may be used as a spreading agent by diluting with water.

Formulation example 3: Dust

1 part of a compound of the present formula (I) is mixed with 97 parts of a 1 : 1 mixture of talc and calcium carbonate and ground, thereby dispersing homogeneously. Then 2 parts of silicic anhydride is added to the mixture and

ground to prepare a dust. The resulting dust may be used as a spreading agent as such.

Formulation example 4: Granule

2 parts of a compound of the formula (I) is mixed with 48 parts of finely powdered bentonite, 48 parts of talc and 2 parts of sodium ligninsulfonate and kneaded, thereby dispersing homogeneously after adding water. Then the mixture is granulated by using an injection molding machine and adjusted to a granular size of 0.6 to 1 mm by using an adjustor and drying screen classifier. The resulting granule may be directly spreaded on paddy fields and soil as such.

Formulation example 5: Oil

0.1 part of a compound of the formula (I) and 0.5 part of piperonyl butoxide are dissolved in illuminating kerosine to the total volume of 100 parts to obtain an oil. The resulting oily composition may be used as such.

Formulation example 6: Aerosol

0.4 part of a compound of the formula (I), 20 parts of piperonyl butoxide, 6 parts of xylene and 7.6 parts of deodorized kerosine are mixed and dissolved. After charging

the mixture into an aerosol container, a valve is fitted and 86 parts of Freon was introduced through the valve to obtain an aerosol.

Formulation example 7: Heating fibrous fumigant pesticidal composition

0.05 g of a compound of the formula (I) is dissolved in an appropriate amount of chloroform and adsorbed in the surface of an asbestos (2.5 cm x 1.5 cm, 0.3 mm in thickness) homogeneously to prepare a fibrous fumigant pesticidal composition of hot plate heating type.

Formulation example 8: Mosquito-repellant incense

0.5 g of a compound of the formula (I) is dissolved in 20 ml of methanol and mixed with 99.5 parts of an incense carrier, which is a mixture (3 : 5 : 1) of tabu powder, pyrethrum marc and wood powder, with stirring. After distilling off the methanol, 150 ml of water was added and the mixture is thoroughly kneaded. By molding and drying, a mosquito-repellant incense is obtained.

To further illustrate the present invention, the following Test Examples are given.

Test example 1 : Effect on Nephotettix cincticeps

Formulation used : A 20% emulsion of the compounds described in Table 3. (Formulation example 1)

Control A : A 50% emulsion of BPMC (2-sec-butylphenyl methylcarbamate)

Method : Rice nurseries of the tri- to tetrafoliate stages (5 to 6 in a bundle) were dipped in the 200 ppm chemical solutions for 15 seconds. After air-drying, the plants were placed in a glass cylinder (ø4.5 x 15 cm).
Then ten female adults of Nephotettix cincticeps, were transferred into the cylinder. After covering with a wire mesh, the cylinder was left in a temperature-controlled green house.
48 hours after treatment, the number of the killed insects was counted to calculate the mortality.
The results are shown in Table 3.

Table 3

| Compound No. | Mortality* (%) |
|---|---|
| 2 | 90 |
| 3 | 100 |
| 6 | 90 |
| 12 | 100 |
| 14 | 100 |
| 15 | 100 |
| 17 | 90 |
| 26 | 100 |
| 30 | 90 |
| 32 | 100 |
| 35 | 100 |
| 36 | 100 |
| 37 | 100 |
| 38 | 100 |
| 39 | 80 |
| 40 | 90 |
| 41 | 100 |
| 42 | 100 |
| 43 | 80 |
| 46 | 100 |
| 49 | 100 |
| 53 | 90 |
| 57 | 100 |
| Control A | 80 |

* Average mortality in 2 replications.

<u>Test example 2</u> : Effects on *Nilaparvata lugens*

Formulation used : A 10% wettable powder of the compounds described in Table 4. (Formulation example 2)

Control B : A 40% wettable powder of CARBARYL (1-naphthyl methylcarbamate)

Method : The same procedures as described in the Test example 1 were repeated in this test, except for that 10 female adults of *Nilaparvata lugens* were used. 48 hours after treatment, the number of the killed insects was counted to calculate the mortality. The results are shown in Table 4.

Table 4

| Compound No. | Mortality* (%) |
|---|---|
| 2 | 100 |
| 4 | 100 |
| 6 | 100 |
| 7 | 100 |
| 8 | 100 |
| 9 | 100 |
| 15 | 100 |
| 17 | 100 |
| 26 | 100 |
| 27 | 100 |
| 30 | 80 |
| 37 | 100 |
| 38 | 100 |
| 39 | 90 |
| 40 | 100 |
| 41 | 100 |
| 42 | 100 |
| 43 | 90 |
| 44 | 90 |
| 46 | 100 |
| 49 | 100 |
| Control B | 80 |

* Average mortality in 2 replications.

Test example 3 : Effect on Myzus persicae (Systemic insecticidal effect)

Formulation used : A 10% wettable powder of the compounds described in Table 5. (Formulation example 2)

Control C : A 50% wettable powder of Acephate (O,S-dimethyl N-acetylphosphoroamidothiolate)

Method : Myzus persicae were generated naturally on cabbage plants with di-to-trifoliate. Then 200 ml of a chemical solution containing 200 ppm of each of the active ingredient was retained in a plastic container (ϕ = 9 cm).

The roots of the above cabbage plants on which Myzus persicae were parasitic, were washed with water, then, dipped in each chemical solution. The number of Myzus persicae which were parasitic on the cabbage plant were counted. Then several pinholes were made in a lid of the container and roots of the cabbage were gone through the lid, finally the plastic container was covered with the lid. The plastic container was left in a temperature-controlled room for 4 days after the treatment, the number of alive adults and

nympha of <u>Myzus persicae</u> was counted to calculate the control efficacy. The results are shown in Table 5.

Control efficacy was calculated with the following formula:

$$\text{Control efficacy} = \frac{\text{Number of killed pests}}{\text{Number of pests used}} \times 100$$

Table 5

| Compound No. | Control efficacy* (%) |
|---|---|
| 1 | 100 |
| 2 | 70 |
| 4 | 100 |
| 5 | 80 |
| 6 | 100 |
| 7 | 100 |
| 8 | 90 |
| 12 | 100 |
| 13 | 100 |
| 14 | 100 |
| 15 | 100 |
| 16 | 100 |
| 17 | 80 |
| 19 | 70 |
| 20 | 70 |
| 21 | 80 |
| 23 | 100 |
| 32 | 80 |
| 34 | 100 |
| 36 | 80 |
| 46 | 90 |
| 49 | 100 |
| 57 | 80 |
| 58 | 100 |
| Control D | 70 |

* Average of 2 replications

Test example 4 : Effects on Plutella xylostella

Formulation used : A 20% emulsion of the compounds described in Table 6. (Formulation example 1)

Control D : A 40% emulsion of MEP (O,O-dimethyl O-4-nitro-m-tolyl phosphorothioate)

Method : A cabbage leaf was dipped in the 200 ppm chemical solution for 15 seconds. After air-drying, the leaf was placed in a small plastic container (ø9 cm x 6 cm). Then 15 larvae (third instar) of Plutella xylostella were transferred into the container. After covering with a lid having several pinholes, the container was left in a temperature-controlled room at 25°C. 48 hours after the treatment, the number of killed insects was counted to calculate the mortality. The results are shown in Table 6.

Table 6

| Compound No. | Mortality (%) |
|---|---|
| 35 | 90 |
| 41 | 100 |
| 43 | 100 |
| 44 | 100 |
| 46 | 100 |
| 48 | 100 |
| 49 | 100 |
| 51 | 80 |
| Control D | 70 |

Test example 5 : Effects on Adoxophyes privatana

Formulation used : A 20% emulsion of the compounds described in Table 7. (Formulation example 1)

Control D : A 40% emulsion of MEP (O,O-dimethyl O-4-nitro-m-tolyl phosphorothioate)

Method : Tea leaves were dipped in the chemical solution containing 200 ppm of each of the active ingredient for 10 seconds. After air-drying, 4 to 5 leaves were placed in a small plastic container (ø9 cm x 6 cm).
Then 10 larvae (third instar) of Adoxophyes privatana were transferred into the container. After covering with a lid having several pinholes, the container was left in a temperature-controlled room at 25°C. 48 hours after the treatment, the number of killed insects was counted to calculate the mortality.
The results are shown in Table 7.

Table 7

| Compound No. | Mortality (%) |
|---|---|
| 26 | 100 |
| 29 | 100 |
| 30 | 100 |
| 31 | 100 |
| 32 | 100 |
| 42 | 100 |
| 43 | 100 |
| 44 | 90 |
| 49 | 100 |
| 53 | 90 |
| 58 | 100 |
| 59 | 100 |
| Control D | 80 |

| | |
|---|---|
| Test example 6 | : Effects on Tetranychus urticae |
| Formulation used | : A 20% emulsion of the compounds described in Table 8. (Formulation example 1) |
| Control E | : Chlorbenziliate (ethyl p,p'-dichlorobenzilate) 45% emulsion |
| Method | : The primary leaf of a potted kidney bean plant was trimmed to a size of approximately 3 cm x 3 cm.<br>Then 15 female adult mites, which were susceptible to organophosphorous insecticides, were transferred onto the leaf using a small brush. Then the plant was left in a temperature-controlled room at 25°C.<br>After one day, dead or abnormal mites were taken out of the leaf. The mites on the leaf were dipped in the chemical solution containing 200 ppm of each of the active ingredient for 10 seconds.<br>After the treatment, the plant was left in the room again.<br>48 hours after the treatment, the number of killed mites was counted to calculate mortality.<br>The results are shown in Table 8. |

Table 8

| Compound No. | Mortality (%) |
|---|---|
| 28 | 100 |
| 29 | 100 |
| 30 | 100 |
| 31 | 100 |
| 32 | 100 |
| 33 | 100 |
| 34 | 100 |
| 35 | 100 |
| 36 | 100 |
| 41 | 100 |
| 42 | 100 |
| 43 | 100 |
| 44 | 100 |
| 46 | 100 |
| 48 | 100 |
| 49 | 100 |
| 50 | 100 |
| 51 | 100 |
| 52 | 100 |
| 53 | 100 |
| 54 | 100 |
| 58 | 100 |
| 59 | 100 |
| Control E | 100 |

Test example 7 : Effects on Culex pipiens pallens

Formulation used : A 0.1% solution of the compounds described in Table 9 in acetone.

Control D : A 0.1% solution of MEP (O,O-dimethyl O-4-nitro-m-tolyl phosphorothioate) in acetone.

Method : 20 third to fourth instar larvae of Culex pipiens pallens were transferred into a plastic container filled with 200 ml of well water.

Then 0.2 ml of the chemical solution was added (finally adjusted to 1 ppm concentration).

24 hours after the treatment, the number of killed larvae was counted to calculate the mortality.

The results are shown in Table 9.

Table 9

| Compound No. | Mortality (%) |
|---|---|
| 25 | 80 |
| 26 | 100 |
| 27 | 100 |
| 28 | 100 |
| 29 | 100 |
| 30 | 100 |
| 31 | 100 |
| 32 | 100 |
| 35 | 100 |
| 38 | 100 |
| 40 | 100 |
| 41 | 100 |
| 42 | 100 |
| 43 | 100 |
| 44 | 100 |
| 46 | 100 |
| 48 | 100 |
| 49 | 100 |
| 50 | 100 |
| 51 | 100 |
| 52 | 100 |
| 58 | 100 |
| 59 | 100 |
| Control D | 100 |

**What we claim is:**

1. A compound of the formula:

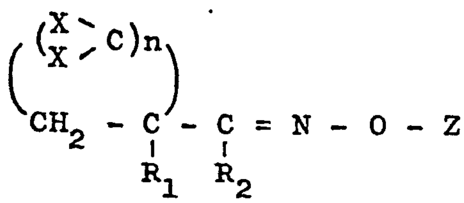 (1)

wherein $R_1$ is hydrogen or methyl, $R_2$ is hydrogen, $C_1 \sim C_4$-alkylthio, $C_1 \sim C_2$-mono-alkylamino, $C_1 \sim C_2$-dialkylamino or cyano, Z is $-\overset{O}{\overset{\|}{C}}-N{<}^{R_3}_{R_4}$ or $-\overset{Y}{\overset{\|}{P}}{<}^{OR_5}_{R_6}$, $R_3$ is methyl, ethyl, propyl or phenyl, $R_4$ is hydrogen or methyl, $R_5$ is $C_1 \sim C_4$-alkyl, $R_6$ is $C_1 \sim C_4$-alkylthio or $C_1 \sim C_3$-alkoxy, X is hydrogen, bromo, chloro or fluoro, Y is oxygen or sulfur provided that X is bromo, chloro or fluoro when Z is $-\overset{O}{\overset{\|}{C}}-N{<}^{R_3}_{R_4}$, n is 1 when X is bromo or chloro, n is 2 when X is fluoro and n is 1 or 2 when X is hydrogen.

2. A compound according to claim 1 having the formula:

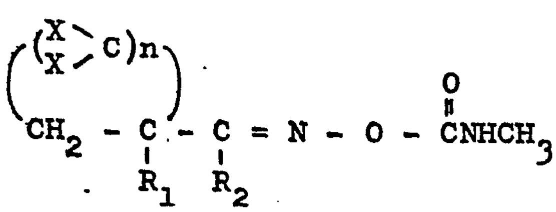 (2)

wherein $R_1$ is hydrogen or methyl, $R_2$ is hydrogen or $C_1 \sim C_4$ alkylthio, X is bromo, chloro or fluoro, n is 1 when X is bromo or chloro and n is 2 when X is fluoro.

3. A compound according to claim 1 having the formula:

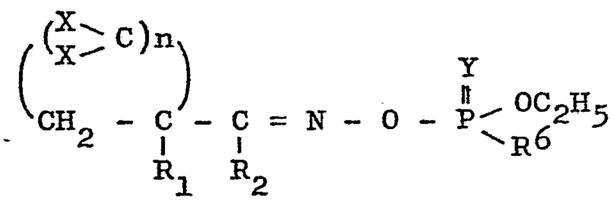 (3)

wherein $R_1$ is hydrogen or methyl, $R_2$ is $C_1 \sim C_4$ alkylthio, $R_6$ is n-propylthio, sec-butylthio or ethoxy, Y is oxygen or sulfur, X is bromo, chloro or fluoro, n is 1 when X is bromo or chloro and n is 2 when X is fluoro.

4. A compound according to claim 2 wherein $R_1$ is hydrogen or methyl, $R_2$ is hydrogen or $C_1 \sim C_3$-alkylthio, X is chloro or fluoro, n is 1 when X is chloro and n is 2 when X is fluoro.

5. A compound according to claim 3 wherein $R_1$ is methyl, $R_2$ is $-SCH_3$ or $-SC_2H_5$ , $R_6$ is n-propylthio or sec-butylthio, Y is oxygen or sulfur, X is chloro or fluoro n is 1 when X is chloro and n is 2 when X is fluoro.

6. The compound according to claim 4 having the formula:

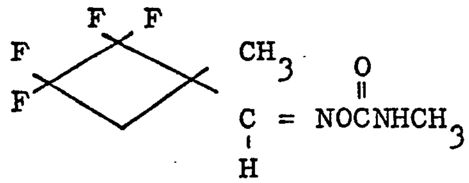

7. A compound according to claim 5 having the formula:

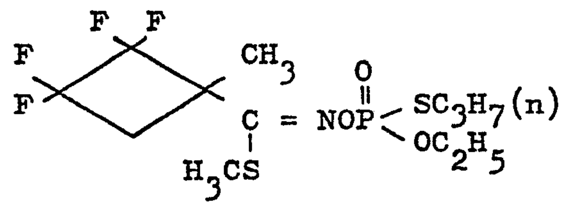

8. An insecticidal or acaricidal composition which comprises 0.2 - 95% by weight of a compound of Formula (1) in claim 1 as an effective component and 5 - 99.8% by weight of adjuvant(s).

9. An insecticidal or acaricidal composition according to claim 8 wherein an effective component is a compound as claimed in claim 2.

10. An insecticidal or acaricidal composition according to claim 8 wherein an effective component is a compound as claimed in claim 3.

11. An insecticidal or acaricidal composition according to claim 9 wherein an effective component is a compound as claimed in claim 4.

12. An insecticidal or acaricidal composition according to claim 10 wherein an effective component is a compound as claimed in claim 5.

13. An insecticidal or acaricidal composition according to claim 11 wherein the effective component is the compound as claimed in claim 6.

14. An insecticidal or acaricidal composition according to claim 12 wherein the effective component is the compound as claimed in claim 7.

15. A method for killing insect pests or acarids which comprises applying said insect pests an effective amount of a compound of Formula (1) in claim 1 as effective component.

16. A method according to claim 15 wherein an effective component is a compound as claimed in claim 2.

17. A method according to claim 15 wherein an effective component is a compound as claimed in claim 3.

18. A method according to claim 16 wherein an effective component is a compound as claimed in claim 4.

19. A method according to claim 17 wherein an effective component is a compound as claimed in claim 5.

20. A method according to claim 18 wherein the effective component is the compound as claimed in claim 6.

21. A method according to claim 19 wherein the effective component is the compound as claimed in claim 7.

22. A process for producing a compound of Formula (1) as claimed in claim 1 which comprises reacting a compound of Formula:

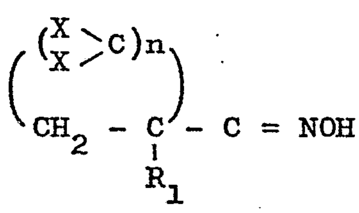

wherein $R_1$, $R_2$, X and n are as defined above with a compound of Formula:

$R_3$-NCO

wherein $R_3$ is as defined above in the presence of a catalyst in a solvent.

23. A process for producing a compound of Formula (1) as claimed in claim 1 which comprises reacting a compound of Formula:

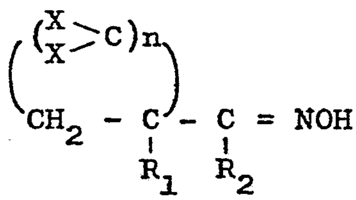

wherein $R_1$, $R_2$, X and n are as defined above with a compound of Formula: 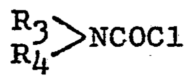

wherein $R_3$ and $R_4$ are as defined above in the presence of a base in a solvent.

24. A process for producing a compound of Formula (1) as claimed in claim 1 which comprises reacting a compound of Formula:

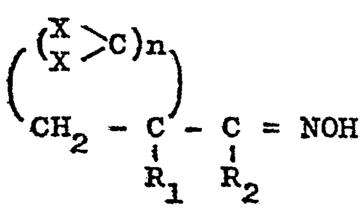

wherein $R_1$, $R_2$ X and n are as defined above with a compound of Formula:

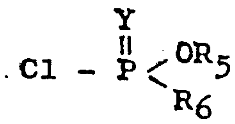

wherein $R_5$, $R_6$ and Y are as defined above in the presence of a base in a solvent.